# FASCICULE DE BREVET EUROPEEN

(11) **EP 1 747 138 B1**
(45) Date de publication et mention de la délivrance du brevet: **10.10.2007**
(21) Numéro de dépôt: 04816444.6
(22) Date de dépôt: 20.12.2004
(51) Int. Cl.: B62B 9/28

(54) **PLATEFORME A ROULETTES ATTELABLE A UNE POUSSETTE**
MIT EINEM KINDER-SPORTWAGEN VERBINDBARE ROLLEN-PLATTENFORM
ROLLER PLATFORM CAPABLE OF BEING COUPLED TO A PUSH CHAIR

(30) Priorité: 19.05.2004 FR 0405458
(43) Date de publication de la demande: 31.01.2007
(73) Titulaire: Equipbaby (UK) Limited, Windsor, Berkshire , SLLA 1DN (GB)
(72) Inventeur: COUSIN, Benoît, F-78340 Les Clayes Sous Bois (FR)
(74) Mandataire: Jaunez, Xavier
(86) Numéro de dépôt international: PCT/FR2004/003311
(87) Numéro de publication internationale: WO 2005/123480

(56) Documents cités:
- EP-B- 1 104 377
- WO-A-99/16653
- DE-U- 20 023 469
- DE-U- 29 719 064

## Description

L'invention concerne une plateforme destinée à être attelée à une poussette ou équivalent.

### ARRIERE-PLAN DE L'INVENTION

L'invention concerne plus particulièrement une plateforme à roulettes destinée à être attelée à une poussette pour notamment transporter un enfant debout, comportant un plateau muni de roulettes et au moins un bras d'attelage qui comporte une première extrémité rapportée sur le plateau et une seconde extrémité adaptée à coopérer avec des moyens de sa fixation à la poussette, conformément au préambule de la revendication 1.

Le document EP 1 104 377 décrit une plateforme du type précité, comportant un plateau qui est attelé à la poussette au moyen de bras qui ont des extrémités rapportées sur le plateau par l'intermédiaire de douilles.

En l'occurrence, les douilles s'étendent selon un axe horizontal commun et comportent des moyens d'arrêt angulaire des bras vis à vis de la plateforme, les bras étant eux-mêmes arrêtés angulairement dans les douilles. Cette disposition permet certes un réglage de l'assiette de la plateforme de sorte que l'assiette soit sensiblement horizontale en utilisation. Cependant, cette disposition est relativement complexe et onéreuse à fabriquer.

Le document DE-U-297 19064 décrit une planche à roulettes pour poussette dans laquelle la liaison entre la planche et la poussette est assurée par une ferrure avant, fixée par vissage direct sous la partie frontale de la plateforme et venant s'accrocher sur l'essieu arrière de la poussette.

Le document DE-U-200 23469 décrit une planche à roulettes pour poussette dans laquelle les extrémités inférieures des bras passent librement dans des évidements de la plateforme : la liaison est alors volontairement lâche.

Le WO-A-99/16653 décrit aussi une planche à roulettes pour poussette dans laquelle la plateforme est reliée aux bras latéraux par une articulation constituée de pions latéraux, de façon à permettre un relevage par pivotement.

Pour l'arrière-plan technologique, on pourra également se référer aux documents US-A-5 887 935, US-A-5 909 887, DE-C-97 662, DE-U-295 06009, DE-U-297 22147, et WO-A-93/22179.

### OBJET DE L'INVENTION

L'invention a pour objet une plateforme dont la liaison entre le plateau et les bras est plus simple que dans les plateformes connues.

### BREVE DESCRIPTION DE L'INVENTION

En vue de la réalisation de ce but, on propose une plateforme à roulettes destinée à être attelée à une poussette pour notamment transporter un enfant debout, comportant un plateau muni de roulettes et au moins un bras d'attelage qui comporte une première extrémité rapportée sur le plateau et une seconde extrémité adaptée à coopérer avec des moyens de sa fixation à la poussette, remarquable en ce que la première extrémité du bras est reçue directement dans un orifice du plateau, sans pièce intermédiaire, conformément à la revendication 1.

La liaison ainsi organisée est particulièrement simple à fabriquer.

Dans un premier mode de réalisation, l'orifice s'étend selon une direction sensiblement perpendiculaire au plateau.

Avantageusement alors, l'orifice et la première extrémité du bras sont lisses, la plateforme comportant des moyens d'arrêt axial et angulaire du bras vis à vis du plateau. De préférence, ces moyens d'arrêt comportent une vis de serrage de la première extrémité du bras d'attelage. La vis s'étend de préférence sur un côté du plateau.

Dans un deuxième mode de réalisation, l'orifice s'étend selon une direction sensiblement parallèle au plateau et perpendiculairement à un plan vertical médian dudit plateau.

Avantageusement alors, l'orifice est lisse, et la première extrémité du bras d'attelage comporte un tronçon d'arbre cylindrique présentant des cannelures axiales, et la plateforme comporte des moyens d'arrêt axial et angulaire du bras vis-à-vis du plateau qui coopèrent avec lesdites cannelures axiales. En particulier, les moyens d'arrêt comportent un patin mobile entre une position active de verrouillage et une position inactive de déverrouillage, ledit patin présentant une surface d'appui cannelée coopérant, dans la position active du patin, avec les cannelures axiales du tronçon d'arbre cylindrique en vue d'un verrouillage axial et angulaire.

Selon un autre aspect de l'invention, la seconde extrémité du bras est reliée à un manchon d'accrochage apte à être rapporté de façon détachable sur un organe d'attelage rapporté sur la poussette.

Avantageusement alors, la liaison entre la seconde extrémité et le manchon d'accrochage est coulissante en vue d'un réglage en longueur du bras d'attelage, avec un verrouillage dans une pluralité de positions axiales prédéterminées.

De préférence encore, le manchon d'accrochage comporte des organes d'accrochage permettant une indexation angulaire du manchon d'accrochage par rapport à l'organe d'attelage. Avantageusement alors, le manchon d'accrochage est rapporté sur une virole montée à rotation sur l'organe d'attelage, l'organe d'attelage comportant des organes d'indexation de la virole par rapport à l'organe d'attelage.

### BREVE DESCRIPTION DES DESSINS

L'invention sera mieux comprise à la lumière de la description qui suit en référence aux figures des dessins annexés parmi lesquelles :
- la figure 1 est une vue en perspective d'une plateforme selon un premier mode de réalisation de l'invention, illustrée attelée à une poussette ;
- la figure 2 est une vue agrandie de la figure 1 illustrant l'un des bras de la plateforme ;
- la figure 3 est une vue en coupe selon la ligne III-III de la figure 2 montrant la liaison entre l'un des bras et le plateau ;
- la figure 4 est une vue en coupe selon la ligne IV-IV de la figure 2 montrant la liaison entre l'un des bras et la poussette ;
- la figure 5 est une vue partielle illustrant en perspective une plateforme selon un deuxième mode de réalisation de l'invention, attelée à une poussette ;
- la figure 6 est une vue éclatée du système de bras utilisé dans le mode de réalisation de la figure 5 ; et
- la figure 7 illustre en vue de dessous le système de verrouillage axial et angulaire à patin mobile coopérant avec l'extrémité cannelée du bras de la figure 6.

### DESCRIPTION DETAILLEE DE L'INVENTION

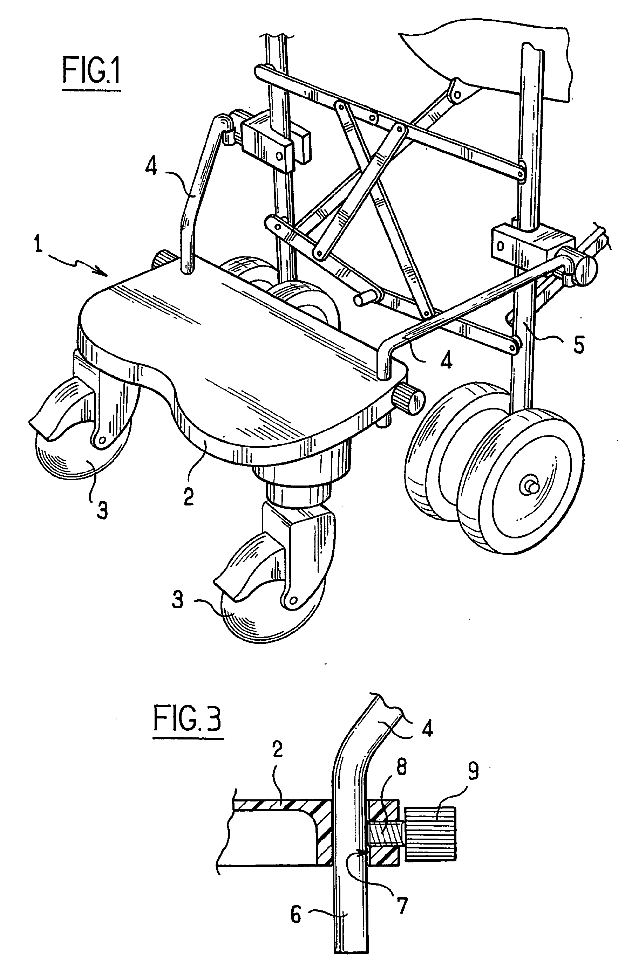

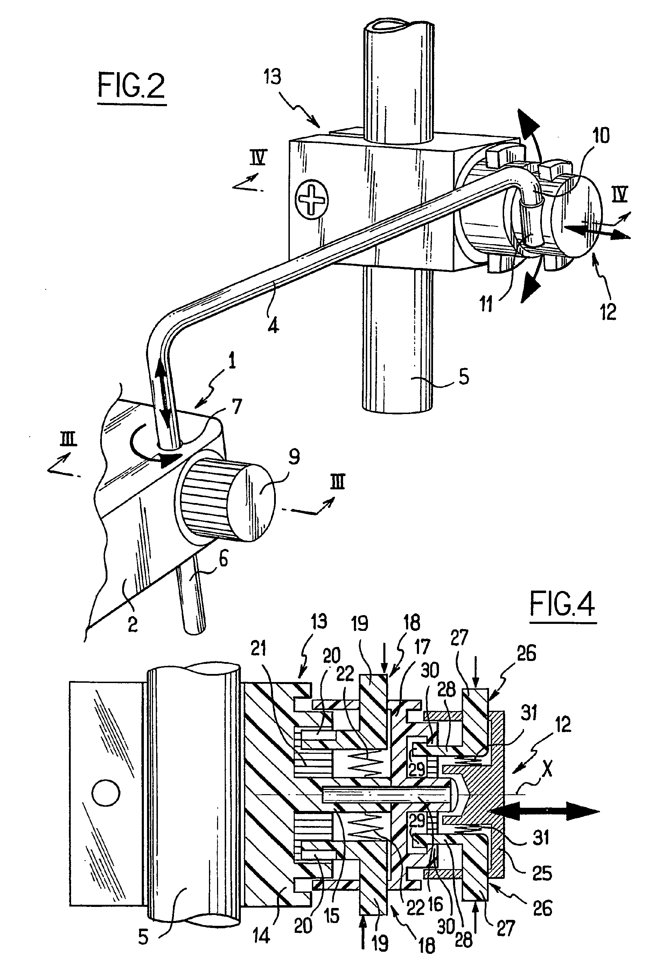

En référence aux figures 1 et 2, la plateforme selon l'invention, généralement désignée par la référence 1, comporte un plateau 2 muni de roulettes 3 pour son appui au sol et des bras 4 pour son attelage à une poussette 5. Le plateau 2 est destiné à recevoir un enfant debout.

Comme cela est visible à la figure 2, chacun des bras 4 comporte une première extrémité 6 qui est reçue directement dans un orifice 7 du plateau 2. Cette liaison particulièrement simple permet un réglage axial et angulaire des bras 4 par rapport au plateau 2, comme cela est illustré par les flèches de la figure 2. Comme cela est visible à la figure 3, une vis de pression 8 comportant une molette de manoeuvre 9 permet d'arrêter l'extrémité 6 dans l'orifice 7 aussi bien axialement qu'angulairement. On notera que la molette 9 s'étend sur un côté du plateau 2, dans un endroit éloigné des pieds de l'enfant.

Comme cela est visible à la figure 2, chacun des bras 4 comporte une seconde extrémité 10 qui est reçue en étant libre de tourner dans un réceptacle 11 d'un manchon d'accrochage 12. Le manchon d'accrochage 12 est rapporté de façon amovible sur un organe d'attelage 13 lui-même rapporté sur la poussette 5.

Comme cela est visible à la figure 4, l'organe d'attelage 13 comporte un corps 14 formant pince pour sa fixation à l'un des montants de la poussette 5. Du corps 14 s'étend une partie allongée 15 qui reçoit un pivot 16 sur lequel une virole 17 est montée pour tourner selon un axe d'articulation X.

La virole 17 porte deux organes d'indexation 18 mobiles radialement qui comportent chacun une partie de manoeuvre 19 qui s'étend radialement au travers de paroi de la virole 17 et une partie d'arrêt 20 qui s'étend axialement pour coopérer avec une couronne dentée 21 interne ménagée dans le corps 14. Des ressorts 22 agissent sur les organes d'indexation 18 pour rappeler les parties d'arrêt 20 en coopération avec la couronne dentée 21, de sorte que la virole 17 soit arrêtée en rotation par rapport au corps 14. Pour faire tourner la virole 17, il suffit d'appuyer sur les parties de manoeuvre 19 des organes d'indexation 18 à l'encontre des ressorts 22 (ainsi que le montrent les flèches sur la figure) pour éloigner les parties d'arrêt 20 de la couronne dentée 21. La virole 17 est ainsi libre en rotation par rapport au corps 14.

Le manchon d'accrochage 12 comporte un corps 25 dans lequel le réceptacle 11 est formé. Le corps 25 porte deux organes d'accrochage 26 mobiles radialement qui comportent chacun une partie de manoeuvre 27 qui s'étend radialement au travers d'une paroi du corps 25, et une partie d'accrochage 28 qui s'étend axialement. La partie d'accrochage 28 a une extrémité formant un redan 29 qui coopère avec un rebord 30 de la virole 17 pour bloquer axialement le manchon d'accrochage 12 sur la virole 17. Des ressorts 31 agissent sur les organes d'accrochage pour rappeler ceux-ci en position de coopération avec le rebord 30 de la virole 17. Pour désolidariser le manchon 12 de la virole 17, il suffit d'appuyer sur les parties de manoeuvre 27 des organes d'accrochage 26 à l'encontre des ressorts 31 de sorte que les redans 29 soient éloignés du rebord 30.

On remarquera que le rebord 30 est cranté intérieurement et coopère avec la partie d'accrochage 28 des organes d'accrochage 26 pour réaliser une indexation angulaire du manchon d'accrochage 12 sur la virole 17.

L'utilisation de la plateforme selon l'invention se fait comme suit : on rapporte les organes d'attelage 13 sur la poussette 5. Puis on règle à l'aide de la vis 8 la position des bras 4 sur le plateau 2 de sorte qu'en utilisation, le plateau soit sensiblement horizontal. Enfin on rapporte les manchons d'accrochage 12 sur les viroles 17 équipant les organes d'attelage 13.

Lorsque le plateau n'est plus utile, on peut soit le retirer en désolidarisant les manchons d'accrochage 12 des organes d'attelage 13, soit le faire pivoter en appuyant sur les organes d'indexation 18 de la virole 17 de façon à rabattre le plateau contre la poussette. Il suffit alors de relâcher les organes d'indexation 18, et le plateau est maintenu en position rabattue contre la poussette.

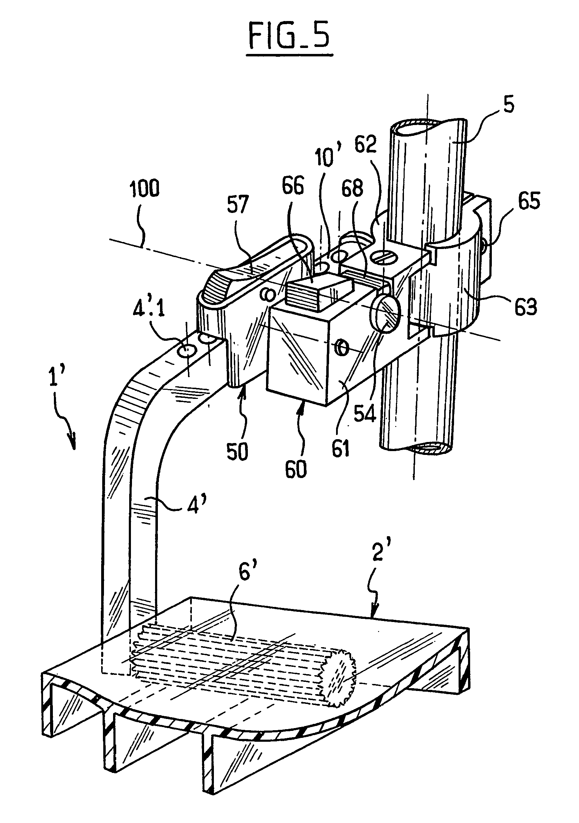

On va maintenant décrire un deuxième mode de réalisation de l'invention, en référence aux figures 5 à 7.

Comme précédemment, dans la plateforme 1', l'extrémité 6' du bras d'attelage 4' est reçue directement dans un orifice du plateau 2' sans pièce intermédiaire, mais cet orifice s'étend en l'espèce dans une direction sensiblement parallèle au plateau 2' et perpendiculairement à un plan vertical médian dudit plateau.

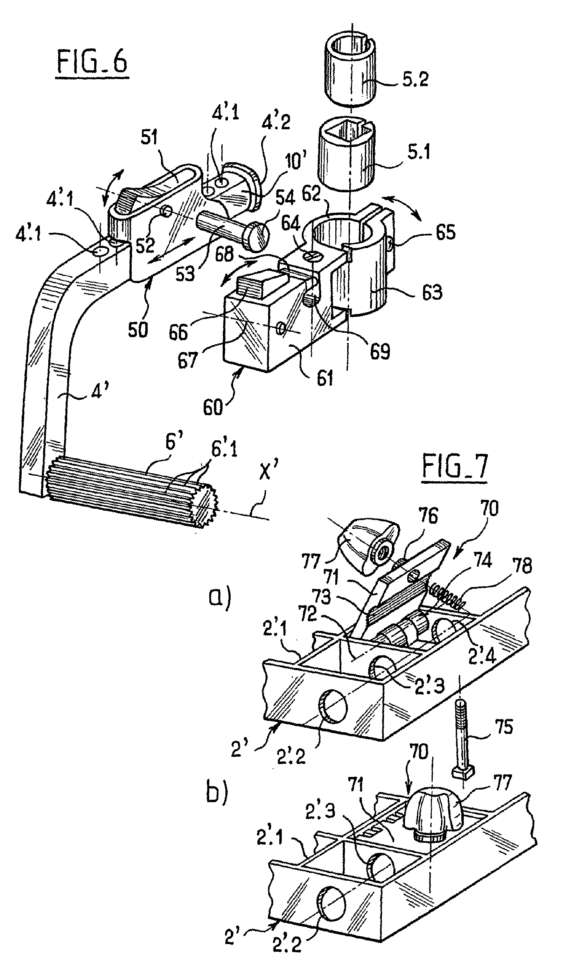

Comme cela est mieux visible sur la figure 7, le plateau 2' présente inférieurement un cloisonnement 2'.1, avec trois perçages coaxiaux 2'.2, 2'.3, 2'.4 qui forment l'orifice précité, lisse en l'espèce, destiné à recevoir l'extrémité du bras d'attelage 4'.

L'extrémité 6' du bras d'attelage 4' comporte ici un tronçon d'arbre cylindrique présentant des cannelures axiales 6' .1, et la plateforme 1', plus précisément le plateau 3' de celle-ci, comporte des moyens notés 70 (non représentés sur la figure 5) d'arrêt axial et angulaire du bras 4' vis-à-vis du plateau 2' qui coopèrent avec ces cannelures axiales.

Les moyens d'arrêt 70 comportent ici un patin 71 mobile, en pivotement autour d'un axe 72, entre une position active de verrouillage (position b) de la figure 7) et une position inactive de déverrouillage (position a) de la figure 7). Le patin 71 présente à cet effet une surface d'appui cannelée 73 coopérant, dans la position active du patin 71, avec les cannelures axiales 6'.1 du tronçon d'arbre cylindrique 6' en vue d'un verrouillage axial et angulaire. Le patin 71 est équipé d'une charnière 74 de pivotement, et d'une bague 76 dans laquelle passe une vis 75 dont l'extrémité filetée se visse dans un organe de manoeuvre 77. Un ressort 78 tend à rappeler le patin 71 dans sa position de déverrouillage. Il est aisé de comprendre qu'en serrant l'organe de manoeuvre 77, les cannelures de la surface d'appui 73 et de l'extrémité cannelée 6' viennent en prise, produisant le verrouillage angulaire du bras 4' dans la position d'inclinaison désirée. Le serrage définitif produit le verrouillage axial (selon l'axe X' de l'extrémité 6') dans la position d'écartement latéral désirée. En desserrant l'organe 77, on peut régler l'inclinaison et/ou l'écartement du bras 4'.

L'autre extrémité 10' du bras 4' passe dans un manchon ou sabot de fixation 50, et présente une collerette d'extrémité 4'.2 pour éviter l'échappement dudit sabot. On constate que l'extrémité 10' comporte une pluralité de perçages 4' .1 dans lesquels peut passer un doigt de verrouillage (non représenté) porté par un taquet 51 monté sur le sabot 50 pour pivoter autour d'un axe 52. Le taquet 51 est sollicité par un ressort (non visible ici) tendant à maintenir le doigt dans le perçage correspondant à la position désirée : on obtient ainsi un verrouillage dans une pluralité de positions axiales prédéterminées, le sabot, lorsqu'il est déverrouillé, coulissant librement sur l'extrémité 10'.

Le sabot 50 porte en outre un doigt latéral 53 avec une tête 54, lequel doigt est reçu dans un logement cylindrique associé 69 d'un organe d'attelage 60 qui est rapporté sur la poussette.

L'organe d'attelage 60 comporte un corps 61 terminé par une mâchoire fixe 62, et une mâchoire mobile 63 (pivotant autour d'un axe 64), ces deux mâchoires enserrant un montant 5 de la poussette, avec un verrouillage dans la position désirée par une vis 65. On a illustré sur la figure 6 des douilles 5.1, 5.2 éventuellement utilisées pour des montants 5 de section carrée, ou ronde de plus petit diamètre. L'organe 60 présente en outre un élément mobile de verrouillage 66, monté pour pivoter autour d'un axe 67, se terminant par un becquet 68 qui ferme ou ouvre, selon la position dudit élément de verrouillage, le logement 69. L'élément de verrouillage 66 présente une partie externe de manoeuvre, et il est rappelé par un ressort (non représenté) dans la position de verrouillage qui est illustrée aux figures 5 et 6.

Une fois en place, le doigt 53, enfermé dans le logement 69, constitue un axe d'articulation horizontal permettant le relevage du plateau 2'.

Si l'on veut démonter l'ensemble bras-plateau, il suffit d'appuyer sur l'élément de verrouillage 66 pour rétracter le becquet 68, et dégager alors le doigt 53.

L'invention n'est pas limitée aux modalités particulières de l'invention qui viennent d'être décrites, mais bien au contraire englobe toute variante entrant dans le cadre de l'invention tel que défini par les revendications.

Bien que l'on ait illustré dans le premier mode de réalisation un plateau comportant des orifices lisses dans lesquels les bras sont reçus directement, sans pièce intermédiaire, les orifices peuvent ne pas être lisses, et comporter par exemple des rainures coopérant avec des nervures des bras pour réaliser une indexation angulaire de ceux-ci vis à vis du plateau.

Bien que l'on ait illustré les bras comme étant montés axialement libres dans les orifices du plateau, les bras pourront comporter une ou deux butées limitant le déplacement axial des bras dans les orifices.

Bien que les orifices s'étendent ici de façon sensiblement perpendiculaire au plateau, les orifices pourront présenter une orientation quelconque par rapport au plateau.

Bien que la plateforme comporte ici deux bras d'attelage, la plateforme pourra ne comporter qu'un seul bras d'attelage.

Bien que l'on ait indiqué que le rebord 30 de la virole 17 est orienté de sorte que le manchon soit indicé sur la virole, on pourra ne réaliser des crans que sur une partie seulement du rebord de façon à autoriser une certaine liberté de rotation de la plateforme vis à vis de la poussette en opération, permettant ainsi d'absorber les irrégularités du sol sans solliciter la liaison entre la poussette et la plateforme, tout en permettant une indexation de la plateforme dans une position de stockage contre la poussette.

De même, dans le deuxième mode de réalisation de l'invention, on pourra utiliser des moyens différents pour assurer le verrouillage axial et/ou angulaire de chaque bras d'attelage.

## Revendications

1. Plateforme à roulettes destinée à être attelée à une poussette pour notamment transporter un enfant debout, comportant un plateau (2 ; 2') muni de roulettes (3) et au moins un bras d'attelage (4 ; 4') qui comporte une première extrémité (6 ; 6') rapportée sur le plateau et une seconde extrémité (10 ; 10') adaptée à coopérer avec des moyens de sa fixation (12,13 ; 50, 60) à la poussette, **caractérisée en ce que** la première extrémité (6 ; 6') du bras d'attelage (4; 4') est reçue directement dans un orifice (7 ; 2'.2, 2'.3, 2'.4) du plateau (2 ; 2'), sans pièce intermédiaire.

2. Plateforme selon la revendication 1, **caractérisée en ce que** l'orifice (7) s'étend selon une direction sensiblement perpendiculaire au plateau (2).

3. Plateforme selon la revendication 1, **caractérisée en ce que** l'orifice (7) et la première extrémité (6) du bras sont lisses et **en ce que** la plateforme comporte des moyens d'arrêt (8,9) axial et angulaire du bras vis à vis du plateau.

4. Plateforme selon la revendication 3, **caractérisée en ce que** les moyens d'arrêt comportent une vis (8,9) de serrage de la première extrémité (6) du bras d'attelage (4).

5. Plateforme selon les revendications 2 et 4, **caractérisée en ce que** la vis (8,9) s'étend sur un côté du plateau (2).

6. Plateforme selon la revendication 1, **caractérisée en ce que** l'orifice (2'.2, 2'.3, 2'.4) s'étend selon une direction sensiblement parallèle au plateau (2') et perpendiculairement à un plan vertical médian dudit plateau.

7. Plateforme selon la revendication 6, **caractérisée en ce que** l'orifice (2'.2, 2'.3, 2'.4) est lisse et la première extrémité (6') du bras d'attelage (4') comporte un tronçon d'arbre cylindrique présentant des cannelures axiales (6'.1), et **en ce que** la plateforme (1') comporte des moyens d'arrêt (70) axial et angulaire du bras (4') vis-à-vis du plateau (2') qui coopèrent avec lesdites cannelures axiales.

8. Plateforme selon la revendication 7, **caractérisée en ce que** les moyens d'arrêt (70) comportent un patin (71) mobile entre une position active de verrouillage et une position inactive de déverrouillage, ledit patin présentant une surface d'appui cannelée (73) coopérant, dans la position active du patin (71), avec les cannelures axiales (6'.1) du tronçon d'arbre cylindrique (6') en vue d'un verrouillage axial et angulaire.

9. Plateforme selon la revendication 1, **caractérisée en ce que** la seconde extrémité (10 ; 10') est reliée à un manchon d'accrochage (12 ; 50) apte à être rapporté de façon détachable sur un organe d'attelage (13 ; 60) rapporté sur la poussette.

10. Plateforme selon la revendication 9, **caractérisée en ce que** la liaison entre la seconde extrémité (10') et le manchon d'accrochage (50) est coulissante en vue d'un réglage en longueur du bras d'attelage (4'), avec un verrouillage dans une pluralité de positions axiales prédéterminées.

11. Plateforme selon la revendication 9, **caractérisée en ce que** le manchon d'accrochage (12) comporte des organes d'accrochage (26) à l'organe d'attelage (13) lesdits organes d'accrochage assurant une indexation angulaire du manchon d'accrochage (12) par rapport à l'organe d'attelage (13).

12. Plateforme selon la revendication 11, **caractérisée en ce que** le manchon d'accrochage (12) est rapporté sur une virole (17) montée à rotation sur l'organe d'attelage (13), l'organe d'attelage comportant des organes d'indexation (18) de la virole par rapport à l'organe d'attelage (13).

## Claims

1. A wheeled platform for coupling to a pushchair, in particular for transporting a standing child, the platform comprising a footplate (2; 2') provided with wheels (3) and at least one coupling arm (4; 4') having a first end (6; 6') fitted to the footplate and a second end (10; 10') adapted to co-operate with means (12, 13; 50, 60) for securing it to the pushchair, the platform being **characterized in that** the first end (6; 6') of the coupling arm (4; 4') is received directly in an orifice (7; 2'.2, 2'.3, 2'.4) of the footplate (2; 2'), without any intermediate part.

2. A platform according to claim 1, **characterized in that** the orifice (7) extends in a direction that is substantially perpendicular to the footplate (2).

3. A platform according to claim 1, **characterized in that** the orifice (7) and the first end (6) of the arm are smooth, and **in that** the platform includes axial and angular stop means (8, 9) for holding the arm relative to the footplate.

4. A platform according to claim 3, **characterized in that** the stop means comprise a screw (8, 9) for tightening against the first end (6) of the coupling arm (4).

5. A platform according to claims 2 and 4, **characterized in that** the screw (8, 9) extends from a side of the footplate (2).

6. A platform according to claim 1, **characterized in that** the orifice (2'.2, 2'.3, 2'.4) extends in a direction that is substantially parallel to the footplate (2') and perpendicularly to a vertical midplane of said footplate.

7. A platform according to claim 6, **characterized in that** the orifice (2'.2, 2'.3, 2'.4) is smooth and the first end (6') of the coupling arm (4') comprises a cylindrical shaft segment presenting axial fluting (6'.1), and **in that** the platform (1') includes axial and angular stop means (70) for holding the arm (4') relative to the footplate (2') and co-operating with said axial fluting.

8. A platform according to claim 7, **characterized in that** the stop means (70) comprise a shoe (71) movable between an active, locking position and an inactive, unlocking position, said shoe presenting a fluted bearing surface (73) that co-operates in the active position of the shoe (71) with the axial fluting (6'.1) of the cylindrical shaft segment (6') in order to provide axial and angular locking.

9. A platform according to claim 1, **characterized in that** the second end (10; 10') is connected to a fastener sleeve (12; 50) suitable for being detachably fitted to a coupling member (13; 60) fitted to the pushchair.

10. A platform according to claim 9, **characterized in that** the connection between the second end (10') and the fastener sleeve (50) is slidable in order to adjust the length of the coupling arm (4'), with locking being provided in a plurality of predetermined axial positions.

11. A platform according to claim 9, **characterized in that** the fastener sleeve (12) includes fastener members (26) for fastening to the coupling member (13), said fastener members providing angular indexing of the fastener sleeve (12) relative to the coupling member (13).

12. A platform according to claim 11, **characterized in that** the fastener sleeve (12) is fitted on a ferrule (17) pivotally mounted on the coupling member (13), the coupling member including indexing members (18) for indexing the ferrule relative to the coupling member (13).

## Patentansprüche

1. Rollbrett, das dazu bestimmt ist, an einen Kinder-Sportwagen angehängt zu werden, um insbesondere ein stehendes Kind zu transportieren, umfassend eine Platte (2; 2'), die mit Rollen (3) und mindestens einem Ankopplungsarm (4; 4') versehen ist, der ein erstes Ende (6; 6') hat, das an der Platte angebracht ist, sowie ein zweites Ende (10; 10'), das dazu geeignet ist, mit Befestigungsmitteln (12, 13; 50, 60) für seine Befestigung am Kinder-Sportwagen zusammenzuwirken, **dadurch gekennzeichnet, dass** das erste Ende (6; 6') des Ankopplungsarms (4; 4') ohne Zwischenstück direkt in einer Öffnung (7; 2'.2, 2'.3, 2'.4) der Platte (2; 2') aufgenommen ist.

2. Brett nach Anspruch 1, **dadurch gekennzeichnet, dass** sich die Öffnung (7) in einer Richtung erstreckt, die im Wesentlichen senkrecht zur Platte (2) ist.

3. Brett nach Anspruch 1, **dadurch gekennzeichnet, dass** die Öffnung (7) und das erste Ende (6) des Armes glatt sind und dass das Brett Blockierungsmittel (8, 9) für eine Blockierung des Arms gegenüber der Platte in axialer Richtung sowie in Winkelrichtung umfasst.

4. Brett nach Anspruch 3, **dadurch gekennzeichnet, dass** die Blockierungsmittel eine Spannschraube (8, 9) zum Spannen des ersten Endes (6) des Ankopplungsarms (4) umfassen.

5. Brett nach den Ansprüchen 2 und 4, **dadurch gekennzeichnet, dass** sich die Schraube (8, 9) auf einer Seite der Platte (2) erstreckt.

6. Brett nach Anspruch 1, **dadurch gekennzeichnet, dass** sich die Öffnung (2'.2, 2'.3,2'.4) in einer im Wesentlichen parallelen Richtung zur Platte (2') und senkrecht zu einer vertikalen Mittelebene der Platte erstreckt.

7. Brett nach Anspruch 6, **dadurch gekennzeichnet, dass** die Öffnung (2'.2, 2'.3, 2'.4) glatt ist und das erste Ende (6') des Ankopplungsarms (4') einen zylindrischen Wellenabschnitt umfasst, der axiale Rillen (6'.1) aufweist, und dass das Brett (1') Blockierungsmittel (70) für eine Blockierung des Arms (4') gegenüber der Platte (2') in axialer Richtung sowie in Winkelrichtung umfasst, die mit den genannten axialen Rillen zusammenwirken.

8. Brett nach Anspruch 7, **dadurch gekennzeichnet, dass** die Blockierungsmittel (70) eine Druckplatte (71) umfassen, die zwischen einer aktiven Verriegelungsposition und einer inaktiven Entriegelungsposition beweglich ist, wobei die Druckplatte eine gerillte Anlagefläche (73) aufweist, die in der aktiven Position der Druckplatte (71) mit den axialen Rillen (6'.1) des zylindrischen Wellenabschnittes (6') zum Zwecke einer Verriegelung in axialer Richtung sowie in Winkelrichtung zusammenwirkt.

9. Brett nach Anspruch 1, **dadurch gekennzeichnet, dass** das zweite Ende (10; 10') mit einer Verankerungshülse (12; 50) verbunden ist, die dazu geeignet ist, auf lösbare Weise an einem an dem Kinder-Sportwagen angebrachten Ankopplungselement (13; 60) angebracht zu werden.

10. Brett nach Anspruch 9, **dadurch gekennzeichnet, dass** die Verbindung zwischen dem zweiten Ende (10') und der Verankerungshülse (50) zum Zwecke einer Längsverstellung des Ankopplungsarms (4') eine Schiebeverbindung ist, wobei eine Verriegelung in einer Vielzahl von vorgegebenen axialen Positionen möglich ist

11. Brett nach Anspruch 9, **dadurch gekennzeichnet, dass** die Verankerungshülse (12) Verankerungselemente (26) für eine Verankerung am Ankopplungselement (13) umfasst, wobei die genannten Verankerungselemente eine Winkelindexierung der Verankerungshülse (12) relativ zum Ankopplungselement (13) sicherstellen.

12. Brett nach Anspruch 11, **dadurch gekennzeichnet, dass** die Verankerungshülse (12) an einem Ring (17) befestigt ist, der drehbar an dem Ankopplungselement (13) gelagert ist, wobei das Ankopplungselement Indexierungselemente (18) für eine Indexierung des Rings relativ zum Ankopplungselement (13) umfasst.
